# EUROPEAN PATENT APPLICATION

(11) **EP 4 614 697 A1**
(43) Date of publication of application: **10.09.2025**
(21) Application number: 24162162.2
(22) Date of filing: 07.03.2024
(51) Int. Cl.: H01M 50/209, H01M 50/262, H01M 50/517

(54) **A BATTERY MODULE, AN ELECTRIC VEHICLE AND A METHOD FOR ASSEMBLING THE BATTERY MODULE**

(71) Applicant: Samsung SDI Co., Ltd., Yongin-si, Gyeonggi-do 17084 (KR)
(72) Inventor: Pucher, Matthias, 8403 Ragnitz (AT)
(74) Representative: Gulde & Partner

(57) **Abstract**

The present disclosure refers to a battery module (100). The battery module (100) includes a first and a second end plates (110, 120). Between the first and the second end plates (110, 120) cells (150) are stacked in a stacking direction. Further, the battery module (100) includes side plates (130, 140), wherein a first end (132) of each of the side plates (130, 140) is connected to the first end plate (110) and a second end of each of the side plates (130, 140) is connected to the second end plate (120). In addition the battery module (100) includes at least one connecting system including a first joining element (111) assigned to the first end plate (110) and a second joining element (131) assigned to one of the side plates (130, 140) and a clamping element (180), wherein the connecting system provides the connection between the first end (132) of the one of the side plates (130, 140) and the first end plate (110) by the first joining element (111), the second joining element (131) and the clamping element (180) and is configured to adjust a distance of the first end plate (110) to the second end plate (120) depending on the relative position of the clamping element (180), the first joining element (111) and the second joining element (131) to each other. The invention further relates to an electric vehicle including the battery module (100) according to the invention and a method for assembly of a battery module (100).

## Description

### Field of the Disclosure

The present disclosure relates to a battery module. The present disclosure also relates to an electric vehicle comprising the battery module and to a method for assembling the battery module.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, end plates may be fixed atop and below or on the frontend sides - depending on installation orientation - the battery modules.

Conventional approaches to battery module layout and assembly involve providing mechanical support for all integrated components (cells, spacers, etc.) through the use of the side plates and end plates. For the assembly itself, the cell stack is compressed either to a specific length or to a specific compression force. After the compression process, the end plates are assembled with the side plates to achieve proper support of all integrated individual parts. Due to the fact that stringing together a large number of individual components (e.g. cells, cell spacers, adhesive film layers, etc.) with different dimensional tolerances leads to a more or less complex tolerance chain, it is preferable and necessary from a technical point of view (production process, functionality, service life, risks...) to compress the stack to a specific force, regardless of the resulting compression type.

For the alternative variant compression to a certain length, a corresponding "force window" must be defined, which is only a compromise solution. The larger the tolerances of all individual parts, the larger the tolerance chain, the larger the "force window". Stable operation of the cell module in line with the process and safety requirements is therefore influenced by the resulting minimum and maximum compression forces after initial assembly.

The mechanical design of the cell stack/cell module must be such that it can withstand the so-called "swelling forces" caused by internal chemical processes in the cell itself during operation. Forces up to 40kN and more must be resisted by end and side plates.

It is common to fix the end plates by conventional (laser) welding methods. Only an appropriately designed overlap area is necessary to handle different compression length values. Alternative mechanical fixings, such as conventional screw fixings in combination with longitudinal drilling, are usually not economically feasible for reasons of space and are technically unacceptable with regard to the transmission of high shear forces due to the relative movement of the clamped parts.

Another typical requirement for the design of cell modules is that all contained parts must be protected against corrosion, depending on the application. Therefore, a rust-resistant and weldable material must be selected, as a previously applied coating is burned away after the welding process.

Common materials for the plates, such as stainless steel and aluminum, have only low yield strength values, which means that the parts have to be designed with increased wall thickness to increase the loaded cross-sectional area in order to be able to transmit all mechanical stresses and loads, especially swelling forces. This leads to lower packing efficiency and generally higher costs, for example the part weight increases due to the lower mechanical strength. With conventional steel, on the other hand, an appropriate antirust coating must be applied. Welding is then no longer possible or only in combination with a subsequently applied coating, which is not cost-efficient because welding damages the coating.

CN 210489671 U discloses a battery module with a battery module frame. The battery module comprises an outer frame. The frame comprises an end plate and side plates which extend in parallel to the stacking direction. The side plates comprise first elongated holes extending in parallel to the stacking direction while the end plate comprise threaded holes for receiving screws. While pressing the battery cells, the screws move along the first elongated holes in parallel to the stacking direction and are then fixed by screwing them into the threaded holes.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery module is provided, including a first and a second end plates, cells stacked between the first and the second end plates in a stacking direction, side plates, wherein a first end of each of the side plates is connected to the first end plate and a second end of each of the side plates is connected to the second end plate, and at least one connecting system including a first joining element assigned to the first end plate and a second joining element assigned to one of the side plates and a clamping element, wherein the connecting system provides the connection between the first end of the one of the side plates and the first end plate by the first joining element, the second joining element and the clamping element and is configured to adjust a distance of the first end plate to the second end plate depending on the relative position of the clamping element, the first joining element and the second joining element to each other.

Another aspect of the present disclosure refers to an electric vehicle including at least one battery module according to the invention.

Yet another aspect of the present disclosure refers to a method for assembly of a battery module, wherein the method includes the steps of a) providing a first and a second end plates; b) providing cells stacked between the first and the second end plates in the stacking direction; c) providing side plates; d) providing at least one connecting system including a first joining element assigned to the first end plate and a second joining element assigned to one of the side plates and a clamping element; f) connecting a first end of one of the side plates and the first end plate by the first joining element, the second joining element, and the clamping element; and g) adjusting a distance of the first end plate to the second end plate and/or a demanded initial compression force acting on the stacked cells based on a relative position of the clamping element, the first joining element, and the second joining element to each other.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1A: illustrates a schematic structure of a battery module in top view.
- Fig. 1B: illustrates a schematic structure of a battery module in perspective view.
- Fig. 1C-1F: illustrates a schematic structure of a battery module in frontal view with side plates according to some embodiments.
- Fig. 2A: illustrates schematically a first compression force and compression lengths of a cell stack before connection to a side plate.
- Fig. 2B: illustrates schematically the connection of the cell stack shown in Fig. 2A with side plates
- Fig. 3A: illustrates schematically a second compression force and a third compression length of a cell stack before connection to a side plate.
- Fig. 3B: illustrates schematically the connection of the cell stack shown in Fig. 3A with side plates.
- Fig. 4A: illustrates a connecting system of a battery module according to an embodiment.
- Fig. 4B: illustrates an enlarged view of the connecting system from Fig. 4A.
- Fig. 4C: illustrates a perspective view of the connecting system from Fig. 4A.
- Fig. 4D: illustrates different arrangements of the connecting system from Fig. 4A.
- Fig. 5A: illustrates a sectional view of the connecting system from Fig. 4A.
- Fig. 5B: illustrates a side view of the connecting system from Fig. 4A.
- Fig. 6A: illustrates a section surface of side plates according to the state of the art.
- Fig. 6B: illustrates a section surface of side plates according to another embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery module is provided, including a first and a second end plate. Between the end plates cells are stacked in a stacking direction. Further, the battery module includes side plates, wherein a first end of each of the side plates is connected to the first end plate and a second end of each of the side plates is connected to the second end plate. In addition the battery module includes at least one connecting system including a first joining element assigned to the first end plate and a second joining element assigned to one of the side plates and a clamping element, wherein the connecting system provides the connection between the first end of the one of the side plates and the first end plate by the first joining element, the second joining element and the clamping element and is configured to adjust a distance of the first end plate to the second end plate depending on the relative position of the clamping element, the first joining element and the second joining element to each other.

Accordingly, each of the side plates extends along the stacking direction between the first and second end plates. Consequently, the cells stacked along the stacking direction are orthogonal to the side plates. The battery module includes two opposing side plates. The battery module includes four side plates, wherein adjacent ordered side plates are arranged orthogonally to each other. Accordingly, side plates are arranged in pairs opposite each other and form a frame surrounding the stacked cells.

The side plates, in addition to the connecting system according to the invention, are provided with the end plates so that they constitute a stable mechanical structure that supports the other components such as cells or also spacers that are arranged between cells.

In other words, the first and second joining elements are joining interfaces, connecting elements, connecting interfaces or connecting features, respectively. The first joining element of the connecting system is assigned to one of the two end plates. Thus, this said first end plate includes the first joining element. The second joining element is assigned to one of the side plates. This said side plate thus includes the second joining element. The connecting system now enables the first end plate to be connected to the one of the side plates. For this purpose, the first and the second joining elements are to be arranged accordingly and then fixed by the clamping element. Therefore, the first joining element, the second joining element and the clamping element in combination with each other provide the connection of the first end of the one of the side plates to the first end plate. In this regard, the elements of the connecting system are connected in certain relative arrangement to each other. It is up to the user to specify this relative arrangement, which then establishes the connection. By this relative arrangement to each other, at the same time a relative arrangement between the side plate and end plate involved in the connection is predefined. The relative arrangement of the elements of the connection system thus defines an arrangement between the one of the side plates and the first end plate. The relative arrangement between the one of the side plates and the first end plate is thereby variable along the stacking direction. Consequently, if the second end plate and the one of the side plates are considered stationary, the relative arrangement of the first and second end plates changes. Consequently, the first end plate changes its arrangement along the stacking direction, i.e., in one dimension, with a change possible in positive and negative stacking direction. This ultimately changes the distance between the first end plate and the second end plate. Accordingly, the connecting system according to the invention makes it possible to adjust the distance between the first end plate and the second end plate during assembly.

In other words, the clamping element is a part that connects and braces the joining elements and can be described as a mating element.

The clamping element is designed to be stressed in shear. Compared to other means, such as screws, these can be stressed in shear. With clamping elements that can be stressed in shear, slippage occurs in the parting line, but this is stopped as soon as the clamping elements abuts a tangential surface or a lateral surface of the plates.

Accordingly, it is possible to provide a battery module that saves costs and installation space. Due to the connecting system, which performs its connecting function through the first joining element, the second joining element and the clamping element, it is possible to dispense with a joining process such as welding. Accordingly, the use of stainless steel or aluminum can be dispensed with for the end plates and side plates, since a coating can now be provided for the plates. This is not exposed to damage due to the absence of welding, so there is permanent corrosion protection.

In addition, materials can be used for the plates that have advantageous mechanical properties. The end plates and/or the side plates include steels, for example high-strength steels. These have higher yield strengths than aluminum or stainless steel and have higher strength. This in turn allows the end plates and side plates to be thinner-walled, enabling smaller dimensions of the battery modules as well as lower weight. Also, required openings, for example to connect electrical poles, would pose significant stability and strength problems in the case of stainless steels compared with high-strength steels. Furthermore, the steels are considerably less expensive than aluminum or stainless steel.

At the same time, the tolerance-related differences in dimensions in the stacking direction are considered, as the connection system allows the distance between the two end plates to be adjusted.

Furthermore, all mechanical requirements, for example resistance to swelling forces, are met and the connecting mechanism allows easy connection of an end plate to a side plate. Furthermore, the accessibility of suitable tools and equipment as well as a simple and cost-effective joining process is ensured.

According to one embodiment, the first joining element and the second joining element at least partially overlap and are disposed at an angle to each other. By overlapping the two joining elements and inclining them relative to each other, they form a variable area for establishing the connection of the one of the first and second end plates and the one of the side plates. In combination with the clamping element, the connection is made. Accordingly, the two plates involved can be moved relative to each other, thereby changing the relative arrangement of the first and second joining elements and the clamping element to the two joining elements. Accordingly, the position of the connection changes. Thus, the distance between the two end plates is varied in an advantageous manner.

The second joining element is disposed in and parallel to a plane formed by a surface of the one of the side plates and the first joining element is disposed parallel to the second joining element.

In an embodiment of the invention, the first joining element and/or the second joining element include an elongated hole. In engineering, an elongated hole refers to an elongated bore or slot. Its narrow sides are terminated by semicircles whose diameter corresponds to the width of the slot. The long sides of the elongated hole run parallel to each other. This represents a particularly simple way of connecting the one of the side plates and the first end plate at a plurality of positions. In the present case, the length is defined from rounding center to rounding center. The clamping element then includes a round cross-sectional area, the diameter of which corresponds to the width of the two elongated holes, which have the same width. Thus, the elongated holes act as a guide within which the clamping element can be moved. This is a structurally simple way to implement the joining elements, which then creates the connection in combination with the clamping element. For example, tolerances that occur in the elongated holes can be easily compensated for, since the elongated holes can be arranged in different positions relative to one another and a connection can still be made even if parts of the elongated holes do not form a continuous opening for the clamping element. The elongated holes at least partially overlap each other and are disposed at an angle to each other. In other words, the elongated holes are arranged at least partially in one line extending in the stacking direction. As a result, the two elongated holes form a continuous opening when overlapping, which can be changed by shifting the two plates involved as previously described.

According to another embodiment, one of the first and second joining elements extends perpendicular to the stacking direction. This one of the first and second joining elements then represents a suitable contact pressure element which fixes the cell stack when the connection is made with the battery module mounted. The swelling forces that occur counteract, among other things, along the stacking direction and the initial compression force. The edge of the one of the first and second joining elements forms a resistance to this, which directly counteracts any force and thus prevents displacement.

One other of the first and second joining elements extends at an angle inclined to the one of the first and second joining elements in the direction of the stacking direction. In other words, the other joining element is arranged inclined with respect to the joining element arranged perpendicular to the stacking direction. As used herein, the inclination in the stacking direction means that the other joining element is inclined along a direction including both a vectoral directional portion extending perpendicularly along the stacking direction and a vectoral portion extending along the stacking direction corresponding to a direction lying between the two portions. This provides a plurality of positions at which the connection can be made in combination with the clamping element, by displacing one of the first and second end plates and one of the side plates relative to each other along the stacking direction. This results in the two joining elements being displaced relative to each other, which also changes the arrangement of the clamping element relative to the two joining elements. This results in a simple and effective change in the distance between the two end plates.

According to a further embodiment, the clamping element extends through the first and second joining elements. After arranging the two joining elements to each other, they are connected and fixed by the clamping element, resulting in the connection of the first end plate and the one of the side plates. This represents a possibility for a connection that eliminates the need for a joining method such as welding. Instead, the clamping element together with the joining elements prevents the change of the relative arrangement to each other, so that accordingly also the plates involved in the connection cannot perform any relative movement to each other.

According to another embodiment, the clamping element includes a blind rivet. By using a blind rivet, especially a heavy-duty blind rivet, a high-strength connection can be achieved. Blind rivets are capable of transmitting very high shear forces. The appropriate type of blind rivet must be selected depending on the occurring operating load, size and number of connecting systems. In combination with the use of (high-strength) steels for the end plates and side plates, which requires appropriate corrosion protection, it is ensured that an anti-corrosion coating is not significantly damaged by the use of the blind rivets. Thus, it is possible to apply a coating before assembly.

The first and the second joining element include each an elongated hole, one of the first and second joining elements being oriented vertically with respect to the stacking direction and the other of the first and second clamping elements being oriented at an angle with respect to the one of the first and second clamping elements. The clamping element includes a blind rivet. The two elongated holes overlap each other. The blind rivet includes a diameter equal to the width of the two elongated holes, which have an equal width. The two elongated holes, when overlapping each other, form a defined position due to their inclination to each other, which allows the blind rivet to protrude through both holes. This position "wanders" along a direction perpendicular to the stacking direction. The wandering occurs by moving one of the first and second end plates forward or backward in the stacking direction. Once a desired alignment of the plates has been achieved, the blind rivet is passed through both elongated holes and the joint is fixed. The connection according to the invention, for example when using the elongated holes and the blind rivets, makes it possible to use steels, for example high-strength steels, as the material for the end plates and side plates. Due to the strength of the high-strength steels, they can be made very thin-walled. Before the battery module is assembled, the plates made of the high-strength steels must be coated with a corrosion inhibitor. The blind rivets used have the advantage that they leave the coating essentially intact and do not cause any damage, so that no significant corrosion occurs. In addition, the plates made of high-strength steels can be designed with considerably thinner walls. The risk of corrosion is also reduced, since the connection with the rivets is a cold joining process that injures the coating.

The first joining element and the second joining element are configured such that the distance between the first end plate and the second end plate can be reduced by 1 mm and increased by 1 mm, starting from a nominal arrangement. In other words, the distance between the first end plate and the second end plate is variable by a total of 2 mm. The distance between the first end plate and the second end plate can be reduced by 1 to 1.5 mm and increased by 1 to 1.5 mm, starting from the nominal arrangement.

The first joining element and the two joining elements, for example when these include elongated holes, are arranged inclined to one another in such a way that, when the two joining elements are displaced relative to one another, the distance between the first end plate and the second end plate can be reduced by 1 mm and increased by 1 mm, starting from a nominal arrangement. In other words, the distance between the first end plate and the second end plate is variable by a total of 2 mm. Particularly The distance between the first end plate and the second end plate can be reduced by 1 to 1.5 mm and increased by 1 to 1.5 mm, starting from the nominal arrangement.

The possible tolerance compensation is determined by the length of the two joining elements, for example the length of the elongated holes, and their angle to each other. The clamping element is a blind rivet that is fixed by a clamping force. The clamping force must always be greater than the resulting force based on the cell forces and acting in the direction of the joining elements, for example in the direction of the elongated holes (that are for example arranged at an angle to each other). As the angle between the two joining elements, for example elongated holes, increases, the resulting force increases. If a certain angle is exceeded, the resulting force exceeds the clamping force, as a result of which the blind rivet is pressed in the direction of the resulting force in the respective joining element, for example elongated hole. The inventors have found that the angle between the two elongated holes is less than 45°, less than 25°, between 5° and 25°, 10° to 20° and particularly 15° to 18°.

The length of the joining elements, for example the elongated holes, has a negative effect on the strength of the plates, so that the length of the joining elements, for example the elongated holes, is less than a maximum value. The length of the elongated holes is 3 mm to 15 mm, 6 mm to 12 mm and particularly 8 to 10 mm.

A particularly advantageous combination includes joining elements including elongated holes with an angle to each other between 13° and 15° with a length of the elongated holes between 8 and 10 mm. On the one hand, this offers suitable tolerance compensation and the ability to absorb cell forces of up to 40 kN.

The angles and lengths mentioned refer for example to battery modules with a height of 100 to 105 mm. For other heights, the lengths of the elongated holes and their number must be scaled accordingly. Present is a number of four pairs of elongated holes per connection of one of the side plates with the first end plate (so four first and second joining elements and four clamping elements), which includes a cumulative elongated hole length of 36 mm for a length of 8 mm to 10mm, i.e. 9 mm on average. In an embodiment in which an elongated hole is arranged perpendicular to the stacking direction, this length remains unchanged. Accordingly, the ratio of a cumulative hole length to the battery module height is about 0.34 to 0.36. Accordingly, the number of elongated holes and/or their individual lengths must be adjusted in the case of a battery module with a different height so that this ratio is maintained. For example, if a height of 80 mm is present, the cumulative elongated hole length is about 28 mm, which corresponds to a combination of 3 elongated holes with a single elongated hole length of about 9.3 mm, or alternatively, to improve force distribution, 4 elongated holes with a single elongated hole length of about 7 mm, which, neglecting the angle as another possible adjustment variable, would slightly reduce the tolerance compensation.

The connecting system includes a plurality of first and second joining elements, each including elongated holes. This results in an advantageous distribution of forces. At least 1 to 5, 2 to 4 and for example 3 to 4 pairs of elongated holes are arranged per side. Accordingly, each connection system includes a plurality of clamping elements. In this way, the required strength is maintained and, at the same time, a force distribution is achieved which avoids local load peaks on the panels.

According to another embodiment, the first end plate includes an edge region in which the first joining element is provided and with which the one of the side plates overlaps. The edge region extends at a right angle to a major surface of the said end plate. In other words, it is angled so that it runs in the direction of the stacking direction, respectively parallel to the one of the side plates connected to the first side plate by the connecting system. The angled edge portion and the first end of the one of the side plates overlap each other at least partially so that they are arranged on top of each other, for example flush with each other, and contact each other. This makes it particularly easy to arrange the first and second joining elements for establishing the connection with the clamping element. In addition, access to the connecting system is simplified by the edge region and assembly is considerably easier to carry out.

According to another embodiment, the battery module includes a further connecting system, wherein the further connecting system provides the connection between the first end of another one of the side plates and the first end plate. This improves mechanical stability by stabilizing and holding the cell stack on several sides. Furthermore, it is possible to adjust and compensate the spacing on several sides according to the tolerances.

According to another embodiment, the one and the another one of the side plates face each other. One of the side plates and the another one of the side plates are arranged opposite each other. In other words, they are arranged on opposite sides of the battery module. Especially with the opposite arrangement of the involved side plates, the adjustment and compensation of the spacing of the endplates is advantageously possible, since usually the tolerance occurs over the entire cross-section vertical to the stacking direction of the battery module.

According to another embodiment, the battery module further includes a plurality of side plates opposing each other in pairs and forming, with the end plates, a battery module cage framing the cells and a plurality of connecting systems, each of the plurality of connecting systems providing the connection between the first end of each of the plurality of side plates and the first end plate. In other words, each of the side plates is connected at its first end to the first end plate by the connecting system according to the invention. The battery module includes four side plates. Accordingly, each two of the four side plates are arranged opposite each other to form a battery module cage having a rectangular cross-sectional area. This provides a battery module cage which, together with the end plates, fixes the cells and ensures mechanical stability. In addition, the deviations may not occur evenly distributed over the cross-section of the cells due to tolerances, but rather unevenly. The plurality of connecting systems can therefore take account of these possibly unevenly occurring deviations on different sides of the battery module and provide different distances or initial compression forces.

According to another embodiment, the battery module includes a further connecting system, wherein the further connecting system provides the connection between the second end of the one of the side plates and the second end plate. This embodiment enables increased tolerance compensation. The connection of the corresponding components to the first and second end plates according to the invention doubles the distance that can be used for compensation. For this further connecting system and for the second end plate, the embodiments described above also apply in the presence of the further connecting system.

According to another embodiment, the relative position of the clamping element, the first joining element and the second joining element is dependent on a demanded distance of the first to the second end plate and/or on a demanded initial compression force acting on the stacked cells. The arrangement according to the invention ensures that a desired and/or demanded initial compression force is exerted on the cell stack. Despite differences in the dimensions of the battery module due to manufacturing and material technology as well as tolerances, this initial compression force is always maintained because the distance between the first and second end plates can be varied. For example, the initial compression force is very important to ensure safe operation, long battery life and proper mechanical fixation of the cells inside the cell module or even the battery case. It is possible, by connecting the end plates to the side plates at different positions, to perform the assembly with compression up to a certain force, the compression length being variable and depending on the tolerance chain. If instead the same distance were specified for each battery module, this would result in different compression forces. Therefore, the connection was made in such a way that the same predetermined initial compression force was always applied. However, it is also possible, if required by the corresponding application, to specify and implement a desired distance between the first and second end plates. Both approaches are made possible by the invention.

Expected, expected relaxation mechanisms are considered so that the initial compression force does not fall below a desired limit value even as the life of the battery module progresses.

According to another aspect of the present disclosure, an electric vehicle including the battery module according to the invention is provided.

Yet another aspect of the present disclosure refers to a method for assembly of a battery module, wherein the method includes the steps of providing a first and a second end plate, providing cells stacked between the end plates in the stacking direction, providing side plates, providing at least one connecting system including a first joining element assigned to the first end plate and a second joining element assigned to one of the side plates and a clamping element, connecting a first end of the one of the side plates and the first end plate by the first joining element, the second joining element, and the clamping element and adjusting a distance of the first end plate to the second end plate and/or a demanded initial compression force acting on the stacked cells based on a relative position of the clamping element, the first joining element, and the second joining element to each other.

### Specific Embodiments

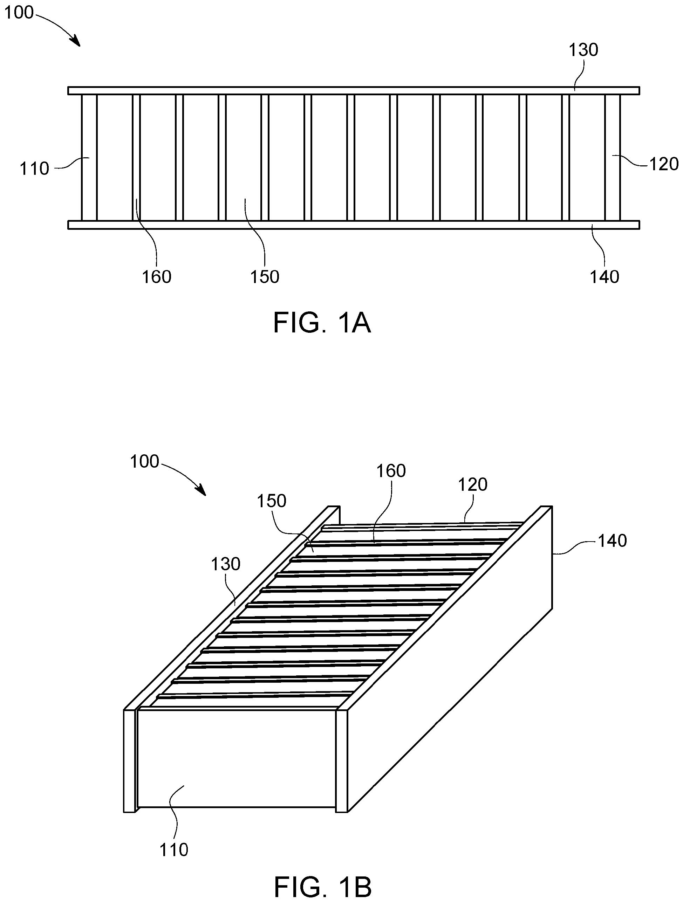

Fig. 1A is a top view of a schematic assembly of a battery module 100. Typical schematic assemblies of battery modules include two opposing side plates, one of the side plates 130 and the other of the side plates 140, having first and second end plates 110, 120 disposed at their first and second ends, respectively, which also oppose each other and are oriented orthogonally to the side plates 130, 140. A plurality of individual battery cells 150 are disposed between the end plates 130, 140 along a stacking direction. Typically, spacers 160 are disposed between the cells 150, as well as intermediate layers not shown, which is neither required nor precluded for consideration of the invention, but is entirely independent. In Fig. 1B, a schematic structure of a battery module 100 in perspective view is shown.

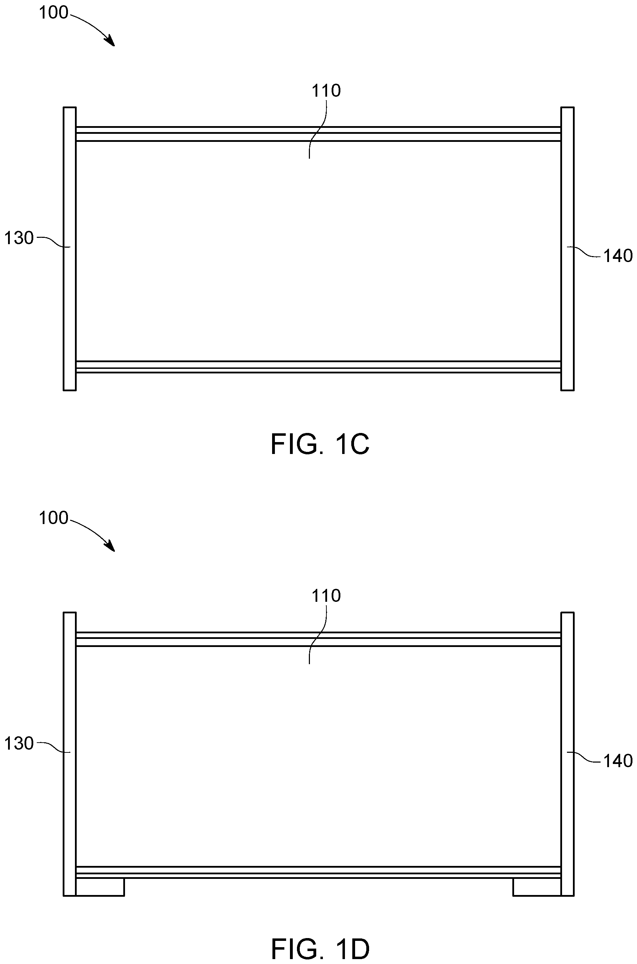

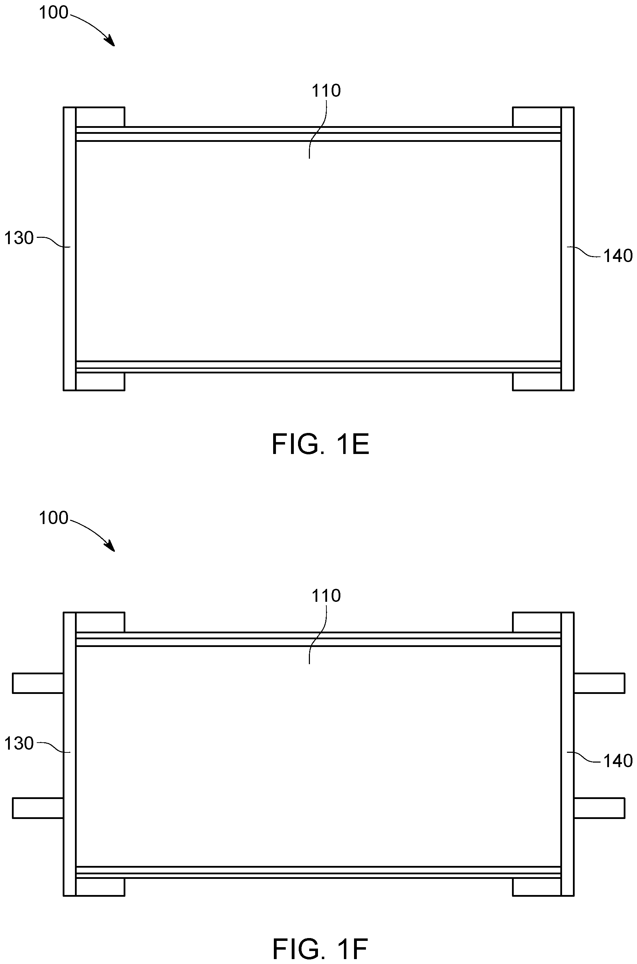

Depending on the purpose or application, the side plates 130, 140 can be designed with different shapes, as shown in Figures 1c to 1f. Straight plates (Fig. 1C), an L-shaped design (Fig. 1D), a C-shaped design (Fig. 1E) or even side plates with lateral fixing ribs or fixing tabs (Fig. 1F) may occur.

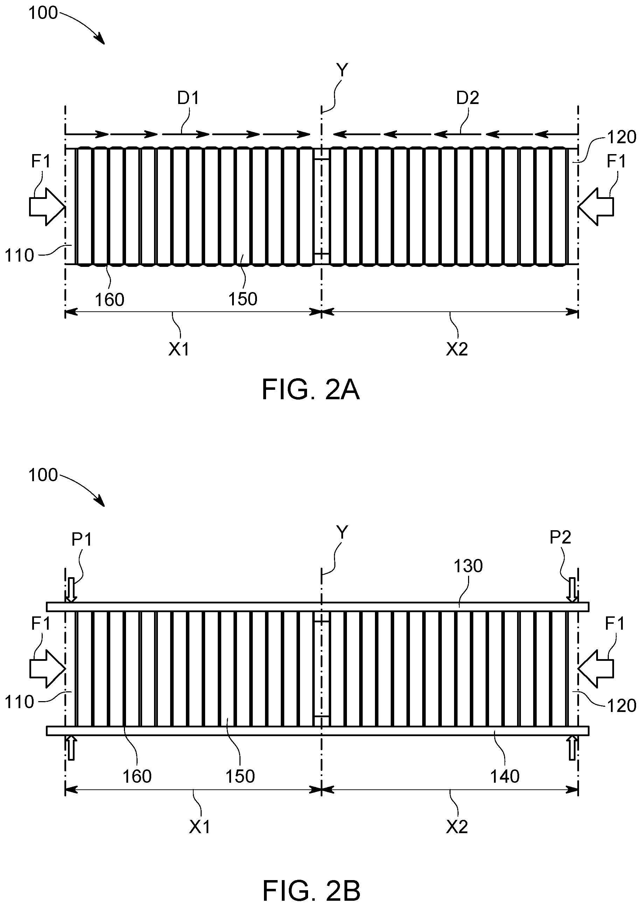

Fig. 2A shows schematically a first initial compression force F1 and compression lengths X1, X2 of a cell stack before connection to a side plate. In force-controlled compression, the cell stack is compressed to a suitable force without regard to the total compression length including compression length X1 plus X2. Depending on the total tolerance chain, the support plane Y, effective single part tolerances and relaxation effects of the components, the compression length X1 + X2 will be different each time for differences of the listed parameters. It should be noted that the compression lengths X1 and X2 are by no means equal in length. Depending on the individual application, they can be the same, but also different from each other.

Fig. 2B shows schematically the connection of the cell stack shown in Fig. 2A with side plates. In practice, the mechanisms described above lead to different joining positions P1 and P2 of the end plates in relation to the side plates.

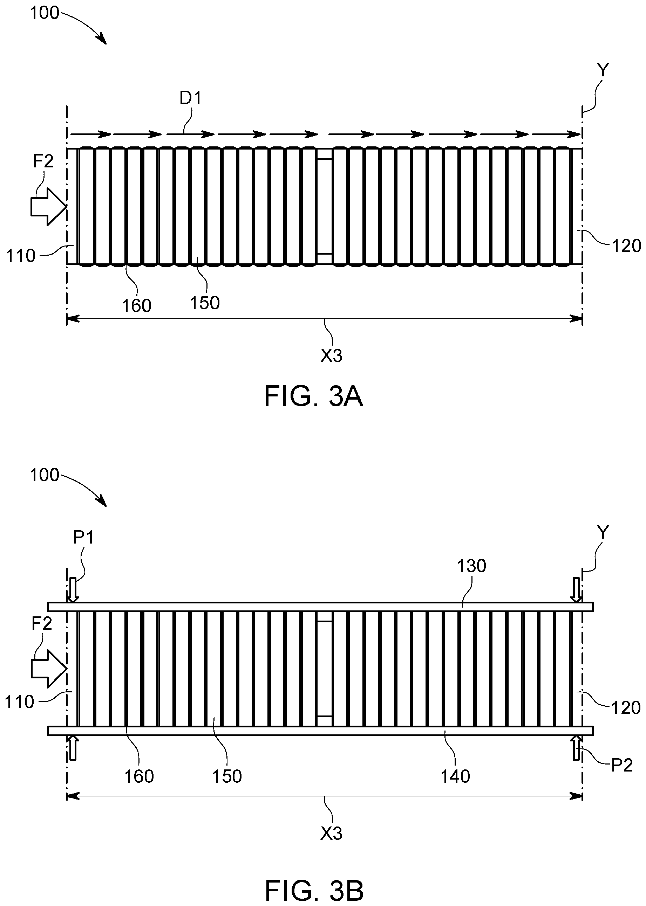

Fig. 3A schematically shows a second compression force F2 and a third compression length X3 of a cell stack before connection to a side plate. The third compression length X3 can also be different each time, depending on the application, and does not necessarily correspond to X1 plus X2. Fig. 3A shows that the support plane Y is located on one side of the battery module 100 and the force F2 acts in one direction only.

Fig. 3B shows schematically the resulting connection points P1 and P2 of the cell stack shown in Fig. 3A with side plates.

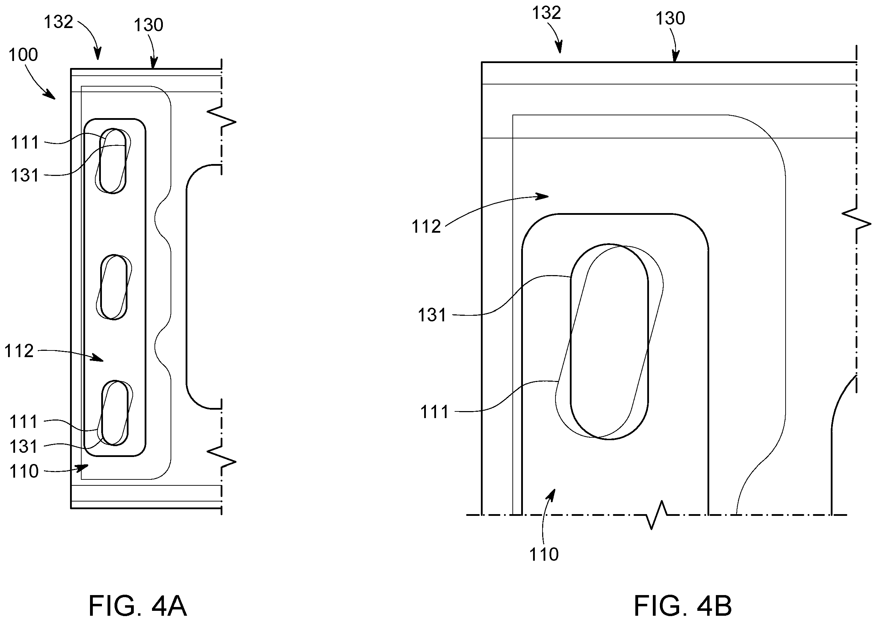

In Fig. 4A a connecting system of a battery module 100 according to an embodiment of the invention is shown. The connecting system includes a second joining element 131, which includes a second elongated hole 131 orientated in vertical direction with respect to the stacking direction and assigned to one of the side plates 130. Further, the connecting system includes a first joining element 111 assigned to the first end plate 110, the first joining element 111 including a first elongated hole 111. The first elongated hole 111 is arranged at an angle or slightly angled with respect to the second elongated hole 131. Both elongated holes 111, 131 are formed by recessing the respective end plates 110, 130 to which the elongated holes 111, 131 are assigned, and consequently lie in a plane with the respective end plates 110, 130. The first and second elongated holes 111, 131 both may have the same width.

Fig. 4B shows an enlarged view of the connecting system from Fig. 4A to illustrate the arrangement of the two elongated holes 111, 131 relative to each other. The inclination of the first joining element 111 relative to the vertically arranged second joining element 131 is clearly visible. Accordingly, the two elongated holes 111, 131 do not lie congruently one above the other. Consequently, they form an opening which is smaller than the opening of the elongated holes 111, 131 themselves. This opening has a widest point. Depending on the relative arrangement of the two elongated holes 111, 131, which can be changed by moving one of the first and second end plates 110, 120, this widest point "moves" upwards or downwards.

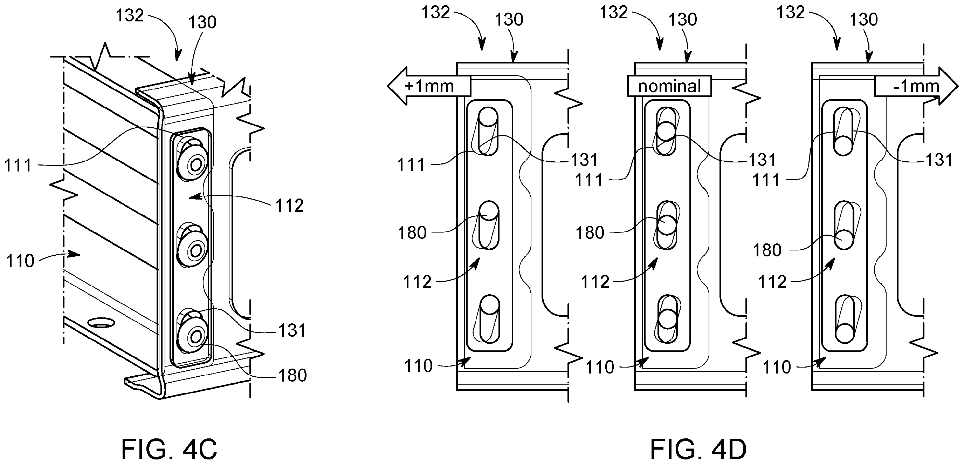

Fig. 4C shows a perspective view of the connecting system from Fig. 4A. The connecting system includes a clamping element 180, which in this case may be a heavy-duty blind rivet. The clamping element 180 includes an axis with a circular cross-section and has a diameter corresponding to the two elongated holes 111, 131. The clamping element 180 protrudes through both elongated holes 111, 131, with the clamping element 180 protruding at the point where the opening formed by both elongated holes 111, 131 is widest. After mounting the clamping element 180, the connection between the first end 132 of the one of the side plates 130 and the first end plate 110 is fixed. This allows a high strength connection to be achieved, also with the ability to remain variable in compression length.

Fig. 4D shows different arrangements of the connecting system from Fig. 4A. In the middle illustration, the two elongated holes 111, 131 are arranged relative to each other in such a way that the widest point of the opening formed by them is located in the middle of the two elongated holes. Starting from this, if necessary, the first end plate 110 can be moved along the stacking direction towards the second end plate 120. As a result, the widest part of said opening "moves" downward. Consequently, the clamping element 180 can no longer protrude through both elongated holes 111, 131 at the previous position, but only at the new lower position. Accordingly, the distance between first and second end plate 110, 120 is reduced. If desired, the connection is then fixed there. In the other case shown on the left, the first end plate 110 is moved along the stacking direction opposite the second end plate 120. Consequently, the clamping element 180 can no longer protrude through both elongated holes 111, 131 at the previous position, but only at the new upper position. Accordingly, the distance between the first 110 and second 120 end plate is increased. If desired, the connection is then fixed there. It can be seen that the longer the elongated holes 111, 131 are and the larger the angle between the two elongated holes 111, 131 becomes, the greater the tolerance compensation value.

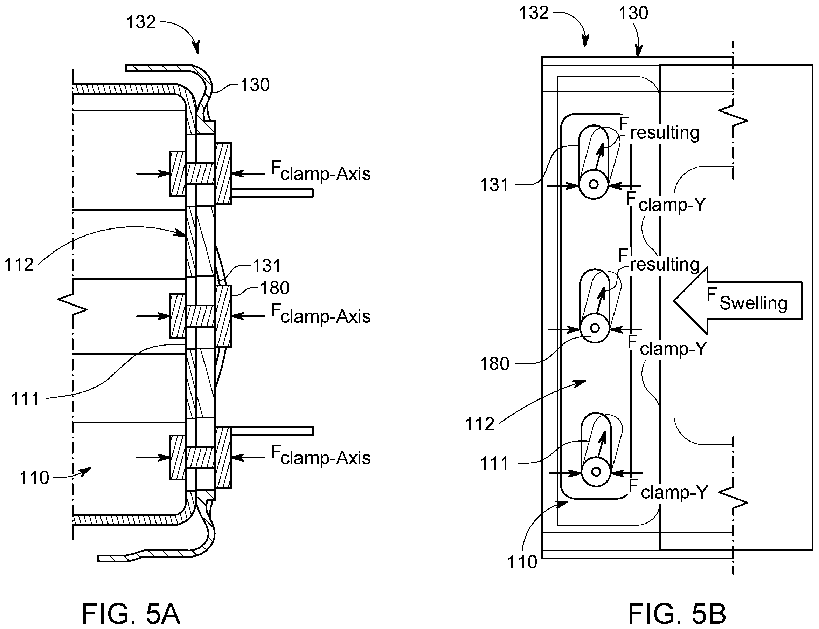

Fig. 5A illustrates a sectional view and Fig. 5B illustrates a side view of the connecting system from Fig. 4A. The forces occurring there are also shown to explain the connection according to the invention. The oblique or slightly inclined elongated hole 111 in the first end plate 110 is intended to prevent the clamping element 180 from moving in the direction of the elongated holes due to the swelling forces F_{Swelling} that occur, or to prevent relative movement of the end plate 110 with respect to the side plate 110. The slight inclination forces the clamping element 180 to wedge at the interface to produce a higher total clamping force, which is composed of a clamping force component F_{clamp-Y} and a clamping force component F_{clamp-Axis}, that exceeds the resultant vector force F_{resulting} that tends to push the clamping element 180 in the elongated hole direction. In other words, the sum of all effective clamping forces F_{clamp-Y} plus F_{clamp-Axis} is higher than the resulting vector force F_{resulting}.

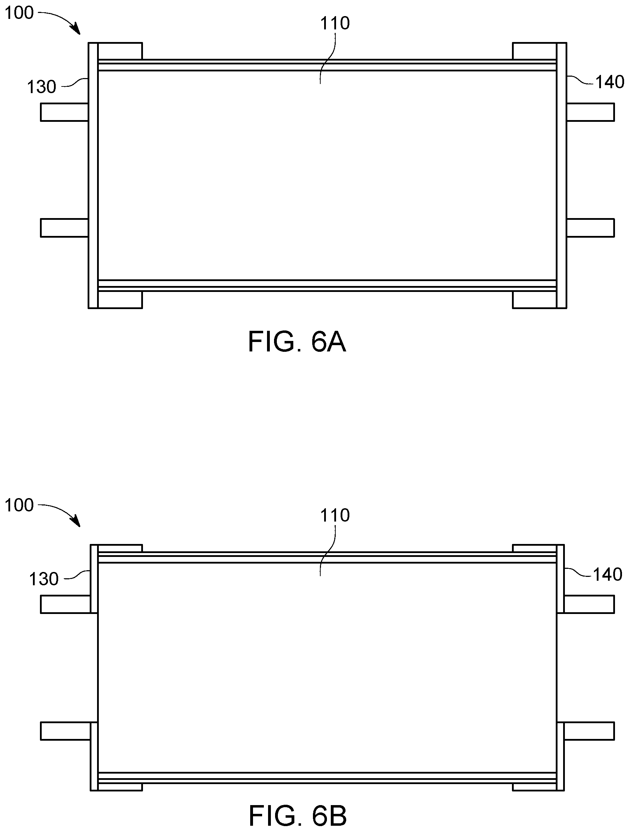

Fig. 6A illustrates a section surface of side plates according to the state of the art. Fig. 6B illustrates a section surface of side plates according to another embodiment of the invention. With the connection according to the invention, it is possible, among other things, to use conventional steel parts with high stability or yield strength. As a result, the loaded cross-sectional area of the parts can be made much thinner, which is a major advantage in terms of installation space, weight and cost. This can be seen from the comparison of the two battery modules shown in Figures 6a and 6b. Since an anti-corrosion coating is not significantly damaged by the use of the blind rivet joint, it is possible to apply a coating in advance.

### Reference signs

- 100: battery module
- 110: first end plate
- 111: first joining element / first elongated hole
- 112: edge region of the first end plate
- 120: second end plate
- 130: one of the side plates
- 131: second joining element / second elongated hole
- 132: first end of the one of side plates
- 140: another one of the side plates
- 142: second end of the another one of the side plates
- 150: (battery) cells
- 160: spacer
- 180: clamping element / blind rivet
- F1: first initial compression force
- F2: second initial compression force
- F_{Swelling}: swelling forces
- F_{clamp-axis}: first clamp forces
- F_{clamp-Y}: second clamp forces
- F_{resulting}: resulting forces
- X1: first compression length
- X2: second compression length
- X3: third compression length
- Y: support plane
- D1: first compression direction
- D2: second compression direction
- P1: first connection point
- P2: second connection point
- w1: first width of side plates
- w1: second width of side plates

## Claims

1. A battery module (100) comprising:
a first and a second end plates (110, 120);
cells (150) stacked between the first and the second end plates (110, 120) in a stacking direction;
side plates (130, 140), wherein a first end (132) of each of the side plates (130, 140) is connected to the first end plate (110) and a second end of each of the side plates (130, 140) is connected to the second end plate (120); and
at least one connecting system comprising a first joining element (111) assigned to the first end plate (110) and a second joining element (131) assigned to one of the side plates (130, 140) and a clamping element (180),
wherein the connecting system provides the connection between the first end (132) of the one of the side plates (130, 140) and the first end plate (110) by the first joining element (111), the second joining element (131) and the clamping element (180) and is configured to adjust a distance of the first end plate (110) to the second end plate (120) depending on the relative position of the clamping element (180), the first joining element (111) and the second joining element (131) to each other.

2. The battery module (100) of claim 1, wherein the first joining element (111) and the second joining element (131) are arranged parallel to each other and at least partially overlap and are disposed at an angle to each other.

3. The battery module (100) according to any one of the preceding claims, wherein the first joining element (111) and/or the second joining element (131) comprise an elongated hole.

4. The battery module (100) according to any one of the preceding claims, wherein one of the first and second joining elements (111, 131) extends perpendicular to the stacking direction.

5. The battery module (100) of claim 4, wherein one other of the first and second joining elements (111, 131) extends at an angle inclined to the one of the first and second joining elements (111, 131) in the direction of the stacking direction.

6. The battery module (100) according to any one of the preceding claims, wherein the clamping element (180) extends through the first and second joining elements (111, 131).

7. The battery module (100) according to any one of the preceding claims, wherein the clamping element (180) comprises a blind rivet.

8. The battery module (100) according to any one of the preceding claims, wherein the first end plate (110) comprises an edge region (112) in which the first joining element (111) is provided and with which the one of the side plates (130, 140) overlaps.

9. The battery module (100) according to any one of the preceding claims, wherein the battery module (100) comprises a further connecting system, wherein the further connecting system provides the connection between the first end of another one of the side plates (130, 140) and the first end plate (110).

10. The battery module (100) of claim 9, wherein the one and the another one of the side plates (130, 140) face each other.

11. The battery module (100) of any one of the preceding claims, further comprising:
a plurality of side plates (130, 140) opposing each other in pairs and forming, with the end plates (110, 120), a battery module cage framing the cells (150); and
a plurality of connecting systems, each of the plurality of connecting systems providing the connection between the first end of each of the plurality of side plates (130, 140) and the first end plate (110).

12. The battery module (100) of any one of the preceding claims, wherein the battery module (100) comprises a further connecting system, wherein the further connecting system provides the connection between the second end of the one of the side plates (130, 140) and the second end plate (120).

13. The battery module (100) according to any one of the preceding claims, wherein the relative position of the clamping element (180), the first joining element (111) and the second joining element (131) is dependent on a demanded distance of the first end plate (110) to the second end plate (120) and/or on a demanded initial compression force acting on the stacked cells (150).

14. An electric vehicle comprising the battery module (100) according to any one of the preceding claims.

15. A method for assembly of a battery module (100), wherein the method comprises the steps of:
a) providing a first and a second end plates (110, 120);
b) providing cells (150) stacked between the first and the second end plates (110, 120) in the stacking direction;
c) providing side plates (130, 140);
d) providing at least one connecting system comprising a first joining element (111) assigned to the first end plate (110) and a second joining element (131) assigned to one of the side plates (130, 140) and a clamping element (180);
f) connecting a first end (132) of the one (130) of the side plates (130, 140) and the first end plate (110) by the first joining element (111), the second joining element (131), and the clamping element (180); and
g) adjusting a distance of the first end plate (110) to the second end plate (120) and/or a demanded initial compression force acting on the stacked cells (150) based on a relative position of the clamping element (180), the first joining element (111), and the second joining element (131) to each other.
